Europäisches Patentamt

European Patent Office

Office européen des brevets

(19)

(11) Veröffentlichungsnummer : **0 201 454 B1**

# EUROPÄISCHE PATENTSCHRIFT

(12)

(45) Veröffentlichungstag der Patentschrift :
24.04.91 Patentblatt 91/17

(51) Int. Cl.⁵ : **A44C 7/00, F16B 21/16**

(21) Anmeldenummer : **86810033.0**

(22) Anmeldetag : **22.01.86**

(54) **Verbindungssicherung bei einem Gegenstand mit zwei lösbar miteinander verbundenen Teilen.**

(30) Priorität : **22.01.85 CH 267/85**

(43) Veröffentlichungstag der Anmeldung :
**12.11.86 Patentblatt 86/46**

(45) Bekanntmachung des Hinweises auf die
Patenterteilung :
**24.04.91 Patentblatt 91/17**

(84) Benannte Vertragsstaaten :
**AT BE CH DE FR GB IT LI NL SE**

(56) Entgegenhaltungen :
**DE-A- 2 610 420
FR-A- 2 498 900
GB-A- 1 117 966
US-A- 3 905 570**

(73) Patentinhaber : **Nitsche, Helmut
Zingelistrasse
CH-6253 Weggis (CH)**

(72) Erfinder : **Nitsche, Helmut
Zingelistrasse
CH-6253 Weggis (CH)**

(74) Vertreter : **Rebmann, John A.
Rebmann-Kupfer & Co., Patentanwaltsbureau
In der Sommerau 9 Postfach 140
CH-8053 Zürich-Witikon (CH)**

## Beschreibung

Bei Sicherungen an Gegenständen mit zwei lösbar miteinander zu verbindenden Teilen sind dieselben entweder ineinander gesteckt oder miteinander verschraubt. Formieren die zu verbindenden Teile einen Verschluss bei einem Schmuckstück, so muss der eine Verbindungsteil massiv gestaltet sein und wenn derselbe aus Metall oder Stein besteht, ist das Gewicht erheblich und für die Träger unkomfortabel, ferner ergeben sich leicht Beschädigungen bei auftretenden Zug- und Seitendruckeinwirkungen. Bei kleinen Gegenständen, wie Ohrringen, hat der benötigte herkömmliche Stift eine Dicke von nur ca. 1 mm, der Aufnahmeteil ist mehrfach grösser und das Belastungsvermögen beschränkt.

Verbindungssicherungen, welche die bestehenden Mängel zu beheben suchten, sind in den nachfolgend angeführten Vorveröffentlichungen bekannt. Das DE-Patent 2.610.420 Sobolewski besitzt einen lösbaren Kopf an einem Einsteckstift, der zwischen zwei federnden Schenkeln, die sich in einem Trichter befinden, lösbar eingeklemmt ist und für Bekleidungsstücke bestimmt ist. Für Ohrschmuck ist ein derartiges Gebilde zufolge der benötigten Vielzahl von Bestandteilen, welche die Herstellung komplizieren und verteuern unzweckmässig. Die Möglichkeit zur Einstellung des Klemmdruckes und die nachträgliche Regelung, wie es zur sicheren und schmerzlosen Festhaltung an Ohrläppchen unerlässlich ist, besteht nicht.

Das FR-Patent 2.498.900 Garnier offenbart einen Ohrschmuck mit einem gespaltenen, federnden, deformierbaren Kopf am Einsteckteil. Die Gelegenheit den Federdruck zu verändern besteht nicht.

Das GB-Patent 1.117.966 Hastings offenbart einen zwischen zwei im Abstand nebeneinander stehenden Federringen eingeführten Kopfstift. Die Federringe greifen in Rinnen am Kopfstift. Die bei Ohrschmuck notwendige veränderliche Feineinstellung der Klemmung ist verhindert, dazu fehlen elastische Verbindungseigenschaften, weshalb die Gefahr unerwünschter Lösung und Beschädigungen bereits bei kleinen seitlichen Druckeinwirkungen beträchtlich ist.

Das US-Patent 3.905.570 Nieuwveld hat ein Verbindungselement für miteinander zu verbindende langgestreckte Gegenstände wie Drähte, Kabel und Rohrstücke in Ausnehmungen von Wandplatten. Für kleine Schmuckstücke, wie Ohrringe ist ein klammerartiger Träger mit zwei im Abstand nebeneinander befindlichen Schenkeln, die mehrere kegelstumpfförmige Segmente besitzen mangels Regelungsfähigkeit der Klemmung als auch wegen der gegebenen klobigen Gestaltung untauglich.

Gegenstand der Erfindung ist eine Verbindungssicherung bei einem Gegenstand mit zwei lösbar miteinander verbundenen Teilen nach dem Oberbegriff des Patentanspruches 1. Derselben liegt die Aufgabe zugrunde dank der eigentümlichen, zähelastischen Effekte eine leicht lösbare, sichere und billige Verbindung mit regelbarem Halteeffekt zu schaffen, welche die beim Gebrauch auftretenden Zug- und Seitendruckeinwirkungen absorbieren und damit Beschädigungen und Selbstlösungen ausschliessen. Weitere wesentliche Ausbildungen sind den abhängigen Patentansprüchen 2 bis 9 entnehmbar.

Weitere Aufgabe ist, Unsachkundigen die Befestigung mit richtigem Haltedruck von Schmuck an Ohrläppchen zu erleichtern, ausserdem soll der Haltedruck fein einstellbar sein und die wichtige Regelung nachträglich ermöglichen. Die geschaffene Kombination von Steck- und Gewindefunktion ermittelt bei Ohrschmuck ungewöhnliche Vorteile, ausserdem wird die Herstellung vereinfacht, verbilligt und die mühelose Befestigung und Wegnahme bewirkt.

Anhand der Zeichnung sind zwei Ausführungsbeispiele erläutert, und zwar zeigen :

Fig. 1 eine Seitenansicht der Verbindungssicherung an einem Träger im Schnitt, der ein Teil eines Ohrläppchens sein kann,

Fig. 2 eine Draufsicht,

Fig. 3 einen Vertikalschnitt des Aufnahmeteiles der Verbindungssicherung und der in diesen einzustecken bestimmte Einsteckteil in Ansicht, in grösserem Massstab,

Fig. 4 eine Ansicht von unten auf den Kopf des Einsteckteiles, in kleinerem Massstab,

Fig. 5 einen Teil des mit dem Hohlschaft verschraubten Gewindestiftes im Vertikalschnitt, in grösserem Massstab und

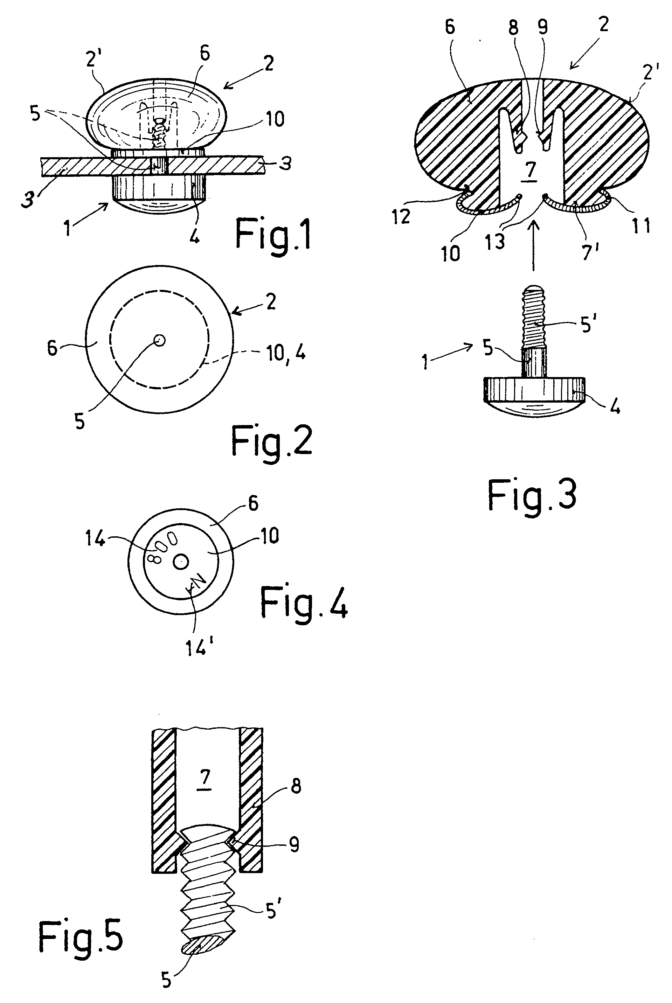

1 bezeichnet einen metallenen Einsteckteil und 2 den aus zähelastischem Kunststoff bestehenden Aufnahmeteil, zwischen welchen beiden Teilen das teilweise gezeigte Ohrläppchen 3 (Fig. 1) eingelegt ist. Der Einsteckteil 1 besteht aus einem Zierkopf 4 und dem ein Sperrglied bildenden Gewindestift 5. Der Gewindestift 5 hat bei einem Ohrschmuck eine Dicke von ca. 0.8 bis 1.2 mm. Der Aufnahmeteil 2 besteht aus einer kugelartigen, abgeflachten Schraubenmutter 6 mit teilweise gewölbter Oberfläche 2'. Die Schraubenmutter 6 besteht aus zähelastischem Kunststoff, der eine hochpolymere Verbindung, wie Polystrol oder dergleichen sein kann. Die Schraubenmutter 6 besitzt im Mittelteil einen zylindrischen Hohlraum 7, welcher sich von der Grundfläche 7' bis auf ca. dreiviertel der Höhe der Schraubenmutter erstreckt. In den Hohlraum 7 ragt ein Hohlschaft 8, dessen Innenwand mit einer nach innen gerichteten, spitzigen Arretierrippe 9 versehen ist, welche in das scharfgängige Gewinde 5' am Gewindestift 5 eingreift.

Die Wandung des Hohlschaftes 8 ist in der Querrichtung innert bestimmten Grenzen elastisch beweglich, da er aus zähelastischem Kunststoff hergestellt ist. Auf der Grundfläche 7' ist ein Metallring 10 aufgesetzt, dessen äusserer Umfangsrand eine aufwärts gerichtete, hakenartige Umbiegung 11 aufweist, welche in eine Rinne 12 in der Schraubenmutter 6 eingeift und in dieser festgelegt ist. Die Innenseite des Metallringes 10 ist mit der oben abgebogenen, teilweise in den Hohlraum 7 des Hohlschaftes 8 ragenden Einbördelung 13 versehen, welche nach oben gegen den Hohlschaft 8 gerichtet ist. Die Einbördelung 13 erleichtert das Einführen des Gewindestiftes 5 in richtiger Stellung in den Hohlschaft 8, ferner fängt diese gegen den Gewindestift 5 gerichtete, seitliche Druckbewegungen federnd auf.

An der Unterseite des Metallringes 10 befinden sich Markierungen 14, 14', von welchen die ersteren die üblichen Gold- oder Silberzeichen und die letzteren den Hersteller anzeigen.

Die Verbindungssicherung ist für Schmuckstücke, wie Ohrschmuck besonders geeignet, ist generell aber auch für andere Gegenstände geeignet, bei welchen der eine Teil aus hartem Material und der andere aus Kunststoff fabriziert ist. Die Selbstauslösung tritt normalerweise auch bei Erschütterungen dank der federelastischen Eingenschaften der Teile 8, 13, welche in den Gewindestift 5 eingreifen, nicht ein. Seitliche Stösse auf die Teile 1, 2 werden unter teilweiser Mitwirkung der Umbiegung 11 und der Einbördelung 13 ebenfalls federelastisch gedämpft und unschädlich gemacht.

Die Verbindungssicherung ist für Zwecke resp. Gegenstände aller Art und neben Schmuckstücken auch bei Mechanismen, Verpackungen usw. geeignet.

## Ansprüche

1. Verbindungssicherung bei einem Gegenstand mit zwei lösbar miteinander verbundenen Teilen, insbesondere Ohrschmuck, mit einem Aufnahmeteil (2) und einem in diesen eingeführten stiftartigen Einsteckteil (1), dadurch gekennzeichnet, dass der Aufnahmeteil (2) durch einen Hohlschaft (8) gebildet ist, welcher einen Hohlraum (7) einschliesst und einen in den letzteren ragenden querseitlich beweglichen Hohlschaft (8) aufweist, mit welchem der eingeführte Einsteckteil (1) in elastischer, lösbarer Steek- und Schraubverbindung steht, wobei der Hohlschaft (8) als Gewinde mitter für den verstellbaren Einsteckteil (1) ausgebildet ist.

2. Verbindungssicherung nach Patentanspruch 1, dadurch gekennzeichnet, dass der in den Hohlraum (7) ragende Hohlschaft (8) an seiner Innenwand den Angreifkörper (9) aufweist, welcher mit dem Einsteckteil (1) in der elastischen Eingriffverbindung steht.

3. Verbindungssicherung nach den Patentansprüchen 1 und 2, dadurch gekennzeichnet, dass der Hohlschaft (8) sich im Mittelbereich des Aufnahmeteiles (2), welcher kopfartig ist, befindet und teilweise in den Hohlraum (7) ragt, wobei der Hohlschaft (8) die kleinere Weite als der Hohlraum (7) aufweist (Fig. 3).

4. Verbindungssicherung nach den Patentansprüchen 1 bis 4, dadurch gekennzeichnet, dass der Angreifkörper (9) sich innenseits des Hohlschaftes (8) befindet.

5. Verbindungssicherung nach den Patentansprüchen 1 bis 4, dadurch gekennzeichnet, dass am Aufnahmeteil (2) ein Metallring (10) vorgesehen ist, welcher innenwandseitig eine Einbördelung (13) aufweist, welche dem Einsteckteil (1) anliegt.

6. Verbindungssicherung nach den Patentansprüchen 1 bis 5, dadurch gekennzeichnet, dass der Metallring (10) an der Umfangsseite eine Umbiegung (11) besitzt, welche in eine Rinne (12) an der Aussenseite des Aufnahmeteiles (2) eingreift.

7. Verbindungssicherung nach den Patentansprüchen 1 bis 6, dadurch gekennzeichnet, dass der Hohlschaft (8) mit dem Angreifkörper (9) aus zähelastischem Kunststoff und der Einsteckteil (1) aus Metall bestehen.

8. Verbindungssicherung nach den Patentansprüchen 1 bis 7, dadurch gekennzeichnet, dass der Angreifkörper (9) am Hohlschaft (8) nasenartig und das Gewinde (5') am stiftartigen Einsteckteil (1) sägezahnartig ist.

9. Verbindungssicherung nach Patentanspruch 1, dadurch gekennzeichnet, dass die lösbare Verbindung eine Schraubverbindung ist.

## Claims

1. Safety connection for an object having two disconnectable parts, in particular ear ornaments, having a receptacle part (2) and a pin-like insertion part (1) which is inserted therein, characterized in that the receptacle part (2) is formed by a hollow shaft (8) which encloses a cavity (7) and has a transversely movable hollow shaft (8) which projects into the said cavity and with which the introduced insertion part (1) is elastically and detachably connected through a plug or screw connection, the hollow shaft (8) being in the form of a threaded nut for the adjustable insertion part (1).

2. Safety connection according to Claim 1, characterized in that the hollow shaft (8) projecting into the cavity (7) has, on its inner wall, the engaging element (9) which engages the insertion part (1) in an elastic connection.

3. Safety connection according to Claims 1 and 2, characterized in that the hollow shaft (8) is located in the central region of the receptacle part (2), which is head-like, and partially projects into the cavity (7), the hollow shaft (8) having a smaller diameter than the cavity (7) (Fig. 3).

4. Safety connection according to Claims 1 to 4, characterized in that the engaging element (9) is located inside the hollow shaft (8).

5. Safety connection according to Claims 1 to 4, characterized in that a metal ring (10) which has a bead (13) on its inner wall is provided on the receptacle part (2), the said bead resting against the insertion part (1).

6. Safety connection according to Claims 1 to 5, characterized in that the metal ring (10) has, at the periphery, a bend (11) which engages a groove (12) in the outside of the receptacle part (2).

7. Safety connection according to Claims 1 to 6, characterized in that the hollow shaft (8) having the engaging element (9) consists of resilient plastic and the insertion part (1) consists of metal.

8. Safety connection according to Claims 1 to 7, characterized in that the engaging element (9) on the hollow shaft (8) is nose-like and the thread (5') on the pin-like insertion part (1) is sawtooth-like.

9. Safety connection according to Claim 1, characterized in that the detachable connection is a screw connection.

**Revendications**

1. Assemblage de sûreté pour un objet comportant deux éléments reliés l'un à l'autre de manière amovible, notamment boucle d'oreille, comportant une pièce de réception (2) et une pièce (1), en forme de tige, enfichable dans la pièce de réception, assemblage caractérisé en ce que la pièce de réception (2) est constituée par une tige creuse (8) qui renferme une cavité (7) et le corps creux (8) pénètre dans cette cavité en pouvant se déplacer transversalement, corps creux avec lequel coopère de manière amovible la pièce enfichable (1), suivant une liaison élastique, amovible par enfichage et vissage, le corps creux (8) étant réalisé en forme d'écrou pour la pièce enfichable (1), réglable.

2. Assemblage de sûreté selon la revendication 1, caractérisé en ce que le corps creux (8) pénétrant dans la cavité (7) comporte un organe de prise (9) sur sa paroi intérieure, cet organe coopérant par prise élastique avec l'élément enfichable (1).

3. Assemblage de sûreté selon les revendications 1 et 2, caractérisé en ce que le corps creux (8) se trouve dans la zone médiane de l'élément de réception (2) qui est en forme de tête et pénètre partiellement dans la cavité (7), le corps creux (8) ayant une largeur plus réduite que la cavité (7) (figure 3).

4. Assemblage de sûreté selon les revendications 1 à 4, caractérisé en ce que l'organe d'attaque (9) est prévu à l'intérieur du corps creux (8).

5. Assemblage de sûreté selon les revendications 1 à 4, caractérisé en ce que l'élément de réception (2) est muni d'un anneau métallique (10) qui présente sur sa paroi intérieure une partie rabattue (13) qui s'applique contre l'élément enfichable (1).

6. Assemblage de sûreté selon les revendications 1 à 5, caractérisé en ce que l'anneau métallique (10) présente une partie pliée (11) sur sa paroi périphérique, partie qui vient prendre dans une goulotte (12) de la face extérieure de l'élément de réception (2).

7. Assemblage de sûreté selon les revendications 1 à 6, caractérisé en ce que le corps creux (8) et l'organe d'attaque (9) sont réalisés en un matériau élastique résistant et l'élément enfichable (1) est en métal.

8. Assemblage de sûreté selon les revendications 1 à 7, caractérisé en ce que l'organe d'attaque (8) est prévu sur le corps creux (8) en forme de nez et le filetage (5') de l'élément enfichable (1) en forme de tige est réalisé en dents de scie.

9. Assemblage de sûreté selon la revendication 1, caractérisé en ce que la liaison amovible est une liaison vissée.

Fig.1

Fig.2

Fig.3

Fig.4

Fig.5